# EUROPEAN PATENT APPLICATION

(11) **EP 1 453 008 A1**
(43) Date of publication of application: **01.09.2004**
(21) Application number: 04075487.1
(22) Date of filing: 17.02.2004
(51) Int. Cl.: G06T 11/00, H04N 1/60

(54) **Cocverted digital colour image with improved colour distinction for colour-blinds**

(30) Priority: 28.02.2003 EP 03075671
(71) Applicant: Océ-Technologies B.V., 5914 CC Venlo (NL)
(72) Inventor: Hofman, Paul Michiel, 5673 PB Nuenen (NL); Ruiterman, Waldo, 9903 AG Appingedam (NL); Heeman, Frederik Gerardus, 5911 AM Venlo (NL)
(74) Representative: van Meeteren, Arend Anthonie

(57) **Abstract**

A method of converting a digital colour image to a digital colour image with improved colour distinction, and more particularly a method of this kind suitable for improving colour distinction in a colour image for an observer suffering from a type of colour-blindness. The method is using an algorithm comprising the steps of:
defining a number of main colour values of the digital colour image;
converting the main colour values to converted main colour values such that the converted main colour values are perceived mainly distinguishable from each other by a colour-blind observer; and
rendering the digital colour image with converted main colour values.

## Description

The invention relates to a method of converting a digital colour image to a digital colour image with improved colour distinction, and more particularly to a method of this kind suitable for improving colour distinction in a colour image for an observer suffering from a type of colour-blindness.

People suffering from colour-blindness may encounter difficulties with certain documents containing colours. Pie charts, histograms, maps etc. can be unreadable for these people. Good design of software or web pages should consider the fact that colour-blind computer users see things differently than most users, as taught by article 'The Eye of the Beholder- Designing for Colour-Blind Users' by C. Rigden in British Telecommunications Engineering, Vol. 17, 443-451 (1999). A method described therein consists in representing images as perceived by people with a certain colour deficiency and using the representation as a check after conception of the document. In order to perform the check, use is made of transformed colour palettes in which each colour of a web-safe palette has been transformed to a colour value as perceived by a colour-blind person. That way, designers can produce documents, software interfaces and web pages which avoid problems for their users. However, this kind of adapted design is seldom applied in reality. Moreover, it has the disadvantage that the design is optimised for the most common deficiency with red and green, while other deficiencies receive less attention.

When colours in a document are used as primary means of information, this can become an issue for colour-blind people. Changing the colours of such existing documents in a given way may enable the colour-blind people to distinguish some colours which would be otherwise perceived mainly equally by them. After such transformation, these documents may be printed or displayed on a screen, by which these people can retrieve the information contained in the original colours.

A method of correcting a digital image for colour-blinds is known from Vischeck (www.vischeck.com/daltonize/). An image processing algorithm is used to improve the situation of people with a colour deficiency. The Vischeck algorithm is a combination of the following steps:
the red/green contrast in the image is increased;
the information conveyed by variations in the red/green direction is analysed and converted into changes in brightness;
the information conveyed by variations in the red/green direction is analysed and converted into changes in blue/yellow coloration.

One step of the Vischeck algorithm makes the red/green variations somewhat more visible to colour-blinds, since many of these people posses some residual red/green discrimination. Another step according to this algorithm performs a mapping of some information contained in the document from an invisible colour dimension for colour-blinds into a colour dimension that they can see.

The Vischeck algorithm has the inconvenient that the type of correction has to be given by hand by the user, meaning that the user has to give for each of the steps of the algorithm a numerical value. This makes the use of the algorithm cumbersome for a user who does not know which values apply to him. Even after a lot of trials, the improvement is still not convincing due to a lack of performance of the algorithm. There are also situations in which said algorithm does not work, meaning-that the colour-blind user still may not be able to retrieve correctly the information contained in the document.

These problems are solved by the present invention which provides a method of converting a digital colour image to a converted digital image, using an algorithm characterised in that it comprises the steps of:
defining a number of main colour values of the digital colour image;
converting the main colour values to converted main colour values such that the converted main colour values are perceived mainly distinguishable from each other by said observer; and
rendering the digital colour image with converted main colour values.

An important benefit of the method according to the invention is that the conversion adapts to the image since main colour values are determined for each image to be converted. The transformation is not a fixed colour conversion and it is made such that converted main colour values are rendered distinguishable to the user. The conversion of the colours in an image does not have to be global, as long as main colours are distinct from each other to the colour-blind observer after transformation. Such an algorithm has the benefit of simplicity of use. The converted digital colour image can be rendered on a print or be displayed on a display screen, like a computer screen or a television screen.

In one embodiment of the method of converting a digital colour image according to the invention, the algorithm further comprises the step of determining the type of colour-blindness said observer is suffering from. That way, the image conversion can be even better adapted to the colour deficiency of the user.

It is preferred that the main colour values are determined by a cluster analysis of the colours of the image to be converted, a main colour value being a representative of the colour values comprised in a cluster. Cluster analysis is a convenient way of analysing the colours of a digital image. The clustering process may take place in any colour space, for example in the L*a*b* colour space, being preferred because it is a perceptual linear space.

A further embodiment of the method of converting a digital colour image according to the invention is characterised in that the colour values comprised in a cluster are converted to converted cluster colour values. In a colour space, some colour values appear in the shape of clouds around a main colour value. The benefit of using a cluster conversion is that the processing speed can be increased since a relatively simple conversion can be used for the colour values comprised in a cluster, while the conversion of main colour values is done with care in order to obtain an optimised image for a user having a colour deficiency.

Preferably, the distribution of the main colour values with respect to confusion lines in at least a part of a colour space is taken into consideration for converting the main colour values, each of said confusion lines comprising colour values which are perceived as mainly indistinguishable from each other by an observer suffering from a type of colour-blindness. Taking into consideration confusion lines leads to a conversion of a digital image being very well adapted to the type of colour-blindness of the observer because such confusion lines reflect quite precisely the way colour-blind people, perceive colours.

For example, a representation of confusion lines in the CIE Yu*v* colour space is convenient, as shown in the article by C. Rigden.

A further embodiment of the method of converting a digital colour image according to the invention is characterised in that the distribution of the converted main colour values with respect to the confusion lines is such that not more than one converted main colour value is allocated on a confusion line. This is an easy way to ensure that the converted main colour values are perceived mainly distinguishable from each other by the colour-blind observer.

The invention particularly provides a method of converting a digital colour image wherein the conversion of the main colour values is done according to a conversion function which allocates to an angle formed between a reference confusion line and a line connecting a main colour value to a confusion point, being a point where the confusion lines intersect, a converted angle, being the angle between the reference confusion line and a line connecting the corresponding converted main colour value to the confusion point. This method of converting main colour values is working particularly well and is easy to implement.

Further, the algorithm can be such that the original angle sequence of the main colour values is maintained for the converted main colour values. This has the advantage that, even after conversion, the image may remain quite natural to the observer having a colour deficiency, in the sense that it remains quite close to the type of vision the person is used to.

According to a further embodiment of the method of converting a digital colour image of the invention, the conversion function is dependent on an image type, recognised by analysing the distribution of the main colour values. This enables an appropriate treatment of each image type with special parameters.

In a further embodiment of the method of converting a digital colour image according to the invention, the conversion function allocates a weight to each main colour value, depending on the number of colour points present in the cluster having said main colour value as representative, which weight determines the type of conversion applied to each main colour value. That way, the size of the cluster can be taken into account. For example, a relatively large cluster should have a relatively large influence on the final cluster positions.

Further, the lightness of the converted main colour values may be such that the contrast between the converted main colour values is optimised for said observer suffering from a type of colour-blindness. This may enable the colour-blind user to distinguish the converted colours even better.

The invention also relates to an apparatus for converting a digital colour image to a digital colour image with improved colour distinction for an observer suffering from a type of colour-blindness, the apparatus being provided with a memory for storing a digital colour image and a processing unit for processing digital data wherein the conversion method according to the invention is applied. The invention further relates to a computer program with a program code for converting a digital colour image to a digital colour image with improved colour distinction for an observer suffering from a type of colour-blindness in accordance with the method of the invention. The invention relates also to a printer provided with a network connection unit for receiving externally generated print orders, a processing unit for processing digital image data and a printing unit, characterised in that the processing unit is provided with an apparatus wherein the conversion method according to the invention is applied. The invention further relates to an image display device provided with a display screen, a processing unit for processing digital image data, wherein the conversion method according to the invention is applied.

The invention will now be explained with reference to the following exemplified embodiment of the present invention, and illustrated by reference to the drawings. This embodiment serves to illustrate the invention and should not be regarded as a limitation thereof.
Fig. 1A is an example of a colour image, like a digital colour image;
Fig. 1B illustrates how the colour image is perceived by an observer suffering from a type of colour-blindness;
Fig. 2 shows confusion lines for an observer suffering from a type of colour-blindness in the CIE Yu*v* colour space;
Fig. 3 is a flow diagram for a conversion method according to an embodiment of the invention;
Fig. 4A illustrates the angle α_{1,1'} made between a line connecting the confusion point P to a main colour value C₁ and a line connecting the confusion point to a corresponding converted main colour value C_{1'}.
Fig. 4B illustrates the angle α_{1',3'} made between a line connecting the confusion point P to a converted main colour C_{1'} and a line connecting the confusion point to a converted main colour C_{3'}.
Fig. 5A is an example of a colour image after a conversion applied to the colours of the image shown in Fig. 1A;
Fig. 5B illustrates how the colour image is perceived after conversion by an observer suffering from a type of colour-blindness;
Fig. 6 is a block diagram of a digital printer usable in the present invention.

Human vision of colours is achieved via photosensitive cells in the eye, the rods and cones. The rods are used for the perception of lightness while the cones are used for trichromatic vision. Each of the three types of cones is used for the perception of a particular band of light spectrum, with sensitivity peaks situated around red, green or blue wavelengths.

When one of these cone types is missing, a person is a dichromat. Most of the times, the red sensitive or the green sensitive cones are missing. It can also happen that the receiving band of light spectrum of the red-sensitive cones is shifted towards green, or the other way around. In this case, a person with such a vision is said to be anomalous trichromat. Finally there is a very small group of people who perceive no colour at all, only lightness.

About eight percent of Caucasian men are colour blind. This is made up of 1 % red-blind (protanope) and 1.1 % green-blind (deuteranope) dichromats and of 1% red-insensitive (protanomolous) and 4.9% green-insensitive (deuteranomolous) trichromats. Only 0.4 % of women have any sort of colour vision deficiency.

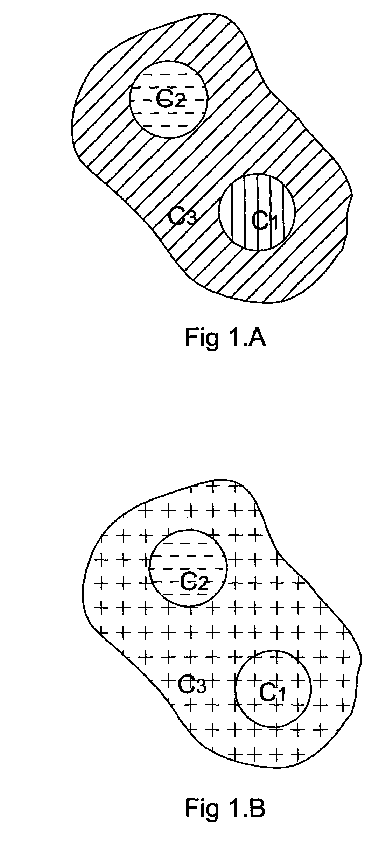

A colour vision deficiency can affect how one perceives any colour that contains an amount of red or green. This problem is illustrated in Figs. 1A and 1B. The colours shown in Fig. 1A, C₁, C₂ and C₃ are distinguishable for a person having a normal colour perception. Fig. 1B represents how a person with a type of colour blindness perceives the same image. Due to a colour vision deficiency, like for example of a protanope, colours C₁ and C₃ are rendered indistinguishable from each other. When important information is contained in these colours, this can be quite a problem for the observer who misses a part of the document's content.

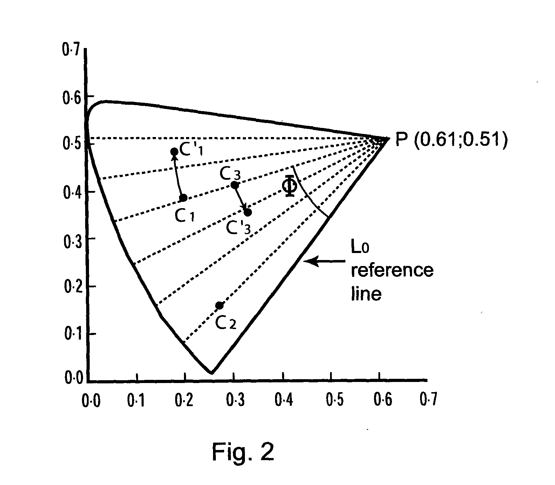

In order to be able to improve things for a colour-blind person, it is important to know the type of colour blindness the person is suffering from. With this information, it is possible to predict which colours appear as indistinguishable. So-called confusion lines are shown in Fig. 2 in the CIE Yu*v* colour space for a protanope observer. For clarity, only a limited number of confusion lines is shown. In theory, there is an infinity of confusion lines in the shown part of the colour space. Colours that lie on a same confusion line will appear the same to a colour-blind person, like the colours C₁ and C₃. In order to render the colours C₁ and C₃ distinguishable from one another to a protanope observer, which would render the image shown in Fig. 1A understandable to this person, a colour conversion is needed.

An easy way of improving the colour distinction is to change only one parameter characterising the colours of a digital colour image, like the hue. In the case that the hue of all colours in shifted in a colour space, the situation could be somewhat improved for a person suffering from colour blindness. However, such a fixed transformation does not work properly for any image, because it could happen that colours that are difficult to distinguish are changed into colours that are difficult to distinguish as well. Even worse, it could be that colours that are clearly distinguishable are transformed into colours that are indistinguishable to a colour-blind observer.

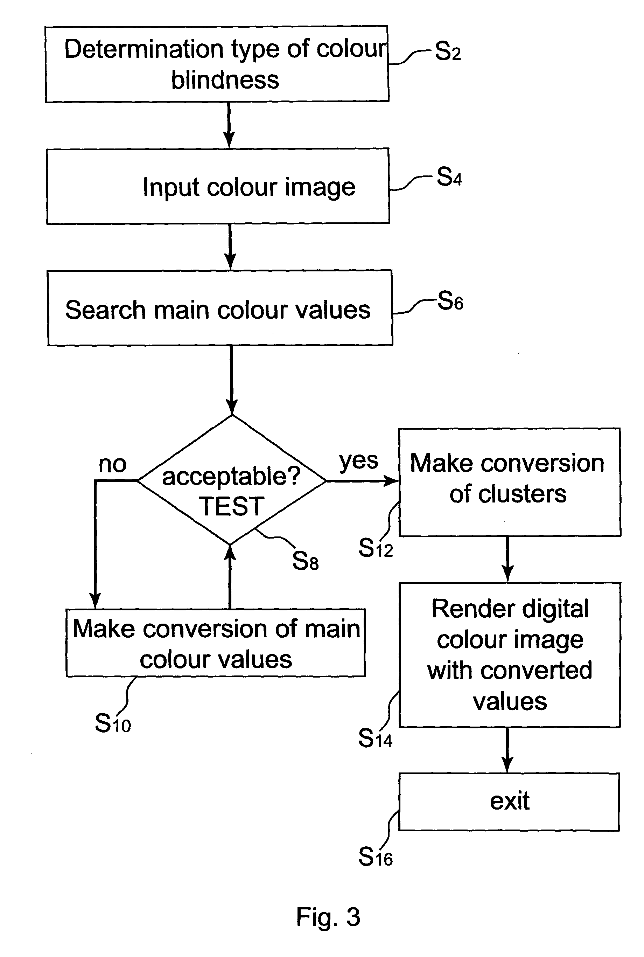

The present invention is now explained with reference to Fig. 3 which is a flow diagram for a conversion method according to an embodiment of the invention. The conversion method can be applied to a digital image built up of pixels or to a digital image described by the use of a page description language like postscript, pdf or pcl.

According to an embodiment of the present invention, the method of converting a digital colour image comprises the step S₂ of determining the type of colour-blindness said observer is suffering from. This can be done using a test like the Ishihara test for colour blindness, which could for example bring to light that a person is a protanope. The result of the test can be entered in the form of data in the memory of a computer and be used by a program. Instead of performing the test determining the type of colour-blindness the user is suffering from, it is possible to make use of selectable pre-determined profiles for different types of colour-blindness. It is also possible to make use of a user profile, in which the characteristics of the vision deficiency of said user are stored. Another step is S₄, consisting in importing a digital colour image, which image can be stored in a memory of a computer.

Another step S₆ to be performed is to define a number of main colour values of the digital colour image. This can be done by a cluster analysis, explained hereinafter, which analysis is performed in a cluster module of a processing unit of a computer. Some digital images, like a pie chart, contain a reduced number of colours and in this case, the main colours are easily defined as being the set of all colours in use in the digital image. Other images however may contain millions of different colours. In such a case, it is not convenient to calculate an adapted conversion for all these colours, because this would require considerable computing power. An analysis is therefore made of the colours occurring in the colour image. In many cases, groups of colours related to varying degrees are found to appear in the colour image and have the appearance of a cloud in a colour space, like the L*a*b* space. Such a cloud is hereinafter referred to as a cluster. A so-called cluster analysis may consist in dividing the colour space in which the work is being carried out into a restricted number of subspaces each containing a cluster. A representative colour value is then selected for each cluster, for example by averaging the colours in the sub-space. Such a representative colour value is hereinafter referred to as a main colour value.

In some cases, it may happen that the found main colours are substantially distinguishable from each other to the colour-blind person, in which case there is no need to modify the main colour values. In such a case, the converted main colour values are simply equal to the main colour values found by step S₆. In order to evaluate whether the main colour values have to be converted or not, a test (step S₈) is performed, according to test parameters which are discussed hereinafter.

If it appears, as a result of the test S₈, that the main colour values are not distinguishable, the following step to be performed is S₁₀ in which the main colour values are converted. A good-working method of conversion consists in making use of the confusion lines as for example shown in Fig. 2. The main colour values C₁ and C₃ lie on a same confusion line, indicating that these colour values are perceived equally by a protanope observer. The converted colour values of C₁ and C₃ are indicated respectively by C_{1'} and C_{3'}. The conversion step according to an embodiment of the method is such that C_{1'} and C_{3'} are positioned on different confusion lines. In this example, C₂ is the only main colour value of its confusion line. Therefore, there is no here need to modify during the conversion the value of C₂. The converted value of C₂ is simply C₂. If possible, care should be taken that at most one converted main colour value is present on a confusion line in order to ensure satisfactory colour distinction for the colour-blind observer. As shown in Fig. 2, each of the main colour values C_{1'}, C_{3'}, and C₂ lies on a different confusion line. These transformed main colour values are thus distinguishable for the colour-blind observer. Then the test S₈ is performed again, and if the converted values are considered acceptable according to test parameters which are discussed hereinafter, the colour values part of the clusters can be converted (step S₁₂) as well and the digital colour image can be rendered with converted main colour values (S₁₄). Finally, the program can be exited (step S₁₆).

A main colour value is a representative colour value of a cluster, obtained for example by averaging the colours in the sub-space. In many cases, it is useful to convert not only the main colour values, but also the colour values being part of a cluster (step S₁₂). Here appears the main interest of using a cluster conversion. An increased processing speed can be achieved since a relatively simple conversion can be used for the colour values comprised in a cluster, while a more complex conversion of main colour values is done in order to obtain an optimised image for a user having a colour deficiency. The size of the cluster, characterised by the number Nᵢ of colour points present in that cluster i, can be taken into account. A relatively large cluster means that many colour points belong to that cluster. Therefore, such a cluster should have a relatively large influence on the final cluster positions. If all clusters, irrespective of their size, had the same influence, a relatively some cluster, or the occurrence of some noise colour points may be a source of a non-optimal cluster redistribution.

As can be seen in Fig. 2, the confusion lines all intersect at one point P, being called the confusion point. In the Yu*v* space, the co-ordinates of the confusion point P are (0.61;0.51), like shown in the example of Fig. 2 for a protanope observer. A well-working method for the conversion of the main colour values is performing a conversion of the angle Φ formed between a reference confusion line L₀ and a line connecting a main colour value to a confusion point. The converted angle, being the angle between the reference confusion line and a line connecting the corresponding converted main colour value to the confusion point, characterises the position in a colour space of the main colour value with respect to the confusion lines.

To perform the step S₈, which is to test whether the distribution of the main colour values is acceptable, the test parameters αₘᵢₙ and αₘₐₓ can be chosen to be relevant parameters, as is explained hereinafter.

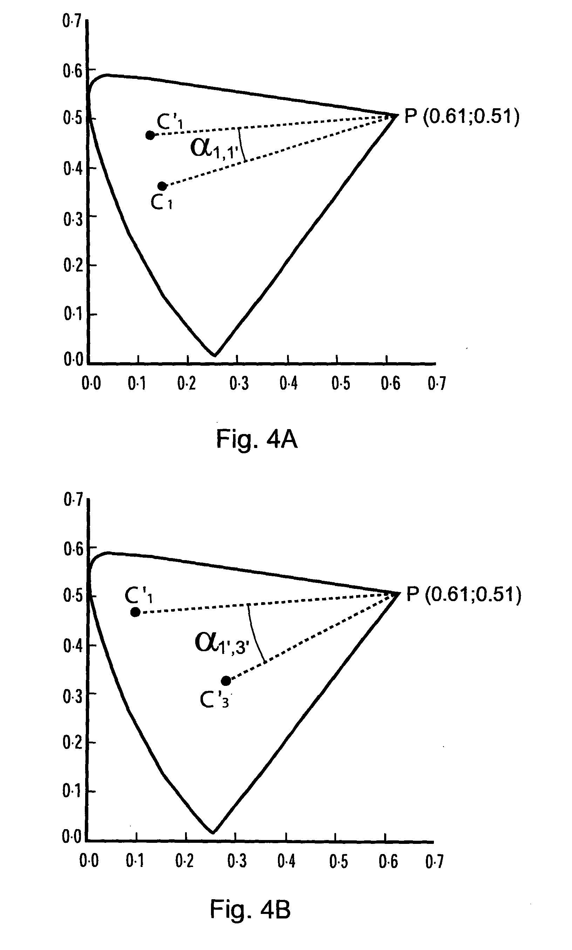

The angle α_{i,i'} is the angle made between the line connecting the confusion point P to the main colour Cᵢ and the line connecting the confusion point P to the converted main colour value C_{i'}. An example of such an angle is shown in Fig. 4A for the main colour value C₁ and the converted main colour value C_{1'}. A requirement of the test could be that each angle α_{i,i'} should not exceed a chosen value αₘₐₓ. This ensures that the change of colour is not exaggerated.

The angle α_{i',j'} is the angle made the line connecting the confusion point P to the converted main colour value C_{i'} and the line connecting the confusion point P to the converted main colour value C_{j'}. An example of such an angle is shown in Fig. 4B for the converted main colour values C_{1'} and C_{3'}. A requirement of the test could be that each angle α_{i',j'} between two confusion lines comprising converted main colour values should be at least larger than αₘᵢₙ When the angle between these lines is larger than αₘᵢₙ, these converted main colour values are considered to be distinguishable from each other.

When the test S₈ is performed with both test parameters αₘᵢₙ and αₘₐₓ. like explained above, colours that were originally indistinguishable are modified enough to render them distinguishable from one another. Nevertheless, the change is not exaggerated and this ensures a good visual quality of the converted image for colour-blind people.

If it appears in S₈ that no conversion of the main colours can be done which satisfies the acceptance test with the originally chosen test parameters, for example when there are too many main colour values, a possible solution is to modify the test parameters. For example, when the value αₘₐₓ is chosen larger, or αₘᵢₙ is chosen smaller, the test S₈ is less severe, and the conversion of the main colour values may become acceptable.

In some cases, it is preferred to maintain the original angle sequence of the main colour values. For line art like pie charts it is not very critical, but for other documents, like photographs or maps... it may be important. In maps, for example, the colour blue is used to represent water, while green is used to represent forests. A colour-blind person is used to this. Therefore, it is in such cases recommendable not to deviate too much from the original colours. The most important feature is that colours are made sufficiently distinguishable from each other for the user.

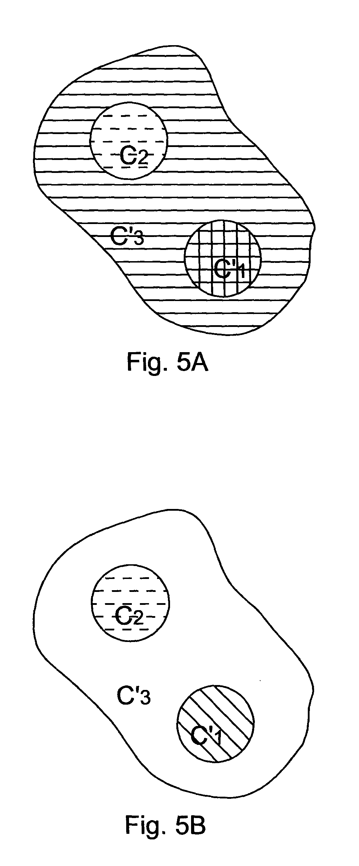

The final result is illustrated in Fig. 5A, being the colour image shown in Fig 1A, after conversion and in Fig. 5B, illustrating how the colour image is perceived after conversion by an observer suffering from a type of colour-blindness. The converted main colour values are visible in Fig. 5A and are C₁', C₂, C₃' . Originally, the colours C₁ and C₃ were the colours that were indistinguishable to the colour-blind observer. After transformation, C₁', C₂, C₃', are distinguishable to this observer, as illustrated in Fig. 5B. As explained above, these main colour values are well suited to render a digital colour image for the said observer because care has been taken that at most one main colour value is positioned on one confusion line.

To improve the final result, the lightness Y can be modified, which permits to create more contrast between the converted main colour values.

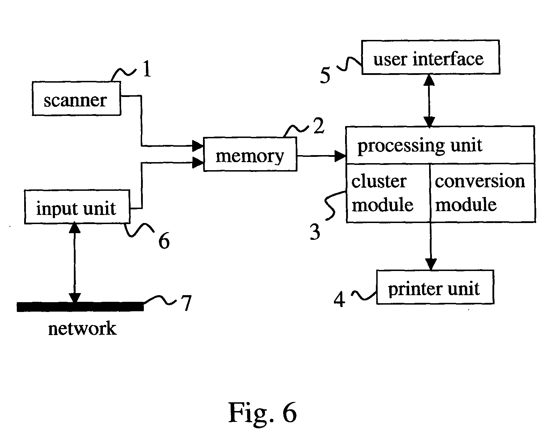

Fig. 6 shows a diagrammatic representation of the most important parts of a digital printer to which the invention as described above is applied.

Referring to Fig. 6, this apparatus is provided with a user interface 5 and an input unit 6 for receiving digital images made elsewhere, e.g. via a network 7, so that the apparatus is used as printer.

The apparatus is also provided with a scanner 1 having a device for converting a recorded image to a digital image, a memory 2 for storing the digital image, a processing unit for processing the digital image and a printing unit 4 for printing the processed digital image on paper or any suitable medium. The apparatus is also suited for use as a photocopier. For printing digital colour images, the printing unit 4 contains a number of colour printing sub-units, each printing a basis colour. For example four colour printing sub-units use the basis colorants cyan, yellow, magenta and black in the form of ink or toner. Colours are rendered with raster techniques such as dithering or error diffusion.

The input image originating from the scanner 1 or the input unit 5 is a usual colour image containing colours that might be indistinguishable to a user suffering from a type of colour blindness. To make a converted print, the processing unit 3 is provided with a cluster module for searching the main colour values and a conversion module for converting the colours of an image to a converted colour values according to the invention.

The processing unit 3 is connected to the operating unit 5, being a user interface. The operator interface 5 comprises selection means for switching on or off the conversion of a digital colour image according to the invention, and may possibly be also provided with setting means for manually setting some parameters of the conversion function, for example by means of a slide or button, to indicate which type of colour-blindness should be taken into account. In an environment with several people suffering from a type of colour-blindness, a parameter that can be given for the conversion function is the identification of the colour-blind user or observer to whom the document is destined. This automatic setting is possible if the type of colour-blindness the person is suffering from is already stored in a memory of the system, like the memory 2. Otherwise, the type of colour blindness of a specific person has to be provided by means of the user interface 5 to perform the manual setting of some parameters. Also, the user interface 5 may be provided with reproducing means, for example a monitor, by means of which the user can interactively access the result of the automated conversion.

When the invention in used in a printer in a network environment, the user can, for example, indicate by means of the printer driver at his workstation that a colour image must be converted for a colour-blind observer and then printed with the converted colours. In that case, a processing device in the printer converts the digital colour image to a digital colour image with improved colour distinction for a colour-blind user, and prints the converted image.

It is also possible to carry out the colour conversion in a separate computer, for example the workstation of a user, and then send the converted digital image to a printer or store it in a mass memory.

Although the invention has been explained by reference to the above-described exemplified embodiment, it is not limited thereto. It will be clear to the skilled person that other embodiments are possible within the scope of the claims.

## Claims

1. Method of converting a digital colour image having colour values to a digital colour image with improved colour distinction for an observer suffering from a type of colour-blindness, wherein the digital colour image with improved colour distinction is having converted colour values, said method using an algorithm **characterised in that** it comprises the steps of:
defining a number of main colour values of the digital colour image;
converting the main colour values to converted main colour values such that the converted main colour values are perceived mainly distinguishable from each other by said observer; and
rendering the digital colour image with converted main colour values.

2. Method of converting a digital colour image according to claim 1, **characterised in that** the algorithm further comprises the step of determining the type of colour-blindness said observer is suffering from.

3. Method of converting a digital colour image according to claim 1 or 2, **characterised in that** the main colour values are determined by a cluster analysis of the colours of the image, a main colour value being a representative of the colour values comprised in a cluster.

4. Method of converting a digital colour image according to claim 3, **characterised in that** the colour values comprised in a cluster are converted to converted cluster colour values.

5. Method of converting a digital colour image according to any of the preceding claims, **characterised in that** the distribution of the main colour values with respect to confusion lines in at least a part of a colour space is taken into consideration for converting the main colour values, each of said confusion lines comprising colour values which are perceived as mainly indistinguishable from each other by an observer suffering from a type of colour-blindness.

6. Method of converting a digital colour image according to claim 5, **characterised in that** the distribution of the converted main colour values with respect to the confusion lines is such that not more than one converted main colour value is allocated on a confusion line.

7. Method of converting a digital colour image according to claim 5 or 6, **characterised in that** the conversion of the main colour values is done according to a conversion function which allocates to an angle formed between a reference confusion line and a line connecting a main colour value to a confusion point, being a point where the confusion lines intersect, a converted angle, being the angle between the reference confusion line and a line connecting the corresponding converted main colour value to the confusion point.

8. Method of converting a digital colour image according to claim 7, **characterised in that** the original angle sequence of the main colour values is maintained for the converted main colour values.

9. Method of converting a digital colour image according to one of the claims 7 or 8, **characterised in that** the conversion function is dependent on an image type, recognised by analysing the distribution of the main colour values.

10. Method of converting a digital colour image according to one of claims 7, 8, or 9, **characterised in that** the conversion function allocates a weight to each main colour value, depending on the number of colour points present in the cluster having said main colour value as representative, which weight determines the type of conversion applied to each main colour value.

11. Method of converting a digital colour image according to any of the preceding claims, **characterised in that** the lightness of the converted main colour values is such that the contrast between the converted main colour values is optimised for said observer suffering from a type of colour-blindness.

12. Apparatus for converting a digital colour image having colour values to a digital colour image with improved colour distinction for an observer suffering from a type of colour-blindness, wherein the digital colour image with improved colour distinction is having converted colour values, the apparatus being provided with a memory for storing a digital colour image and a processing unit for processing digital data, **characterised in that** the apparatus comprises:
a cluster module for determining main colour values of the digital colour image by means of a cluster analysis of the colours values in a colour space; and
a conversion module for converting the main colour values to converted main colour values such that the converted main colour values are perceived mainly distinguishable from each other by said observer by means of a conversion function.

13. Apparatus for converting a digital colour image to a digital colour image with improved colour distinction for an observer suffering from a type of colour-blindness according to claim 12, **characterised in that** the apparatus further comprises an analysis module for determining the type of colour-blindness said observer is suffering from.

14. Apparatus for converting a digital colour image to a digital colour image with improved colour distinction for an observer suffering from a type of colour-blindness according to claim 12 or 13, **characterised in that** the apparatus further comprises a colour mapping module for establishing the position in a part of the colour space of the main colour values and of converted main colour values with respect to confusion lines.

15. Computer program with a program code for converting a digital colour image to a digital colour image with improved colour distinction for an observer suffering from a type of colour-blindness in accordance with the method of any of the claims 1-11, when the program is performed in a computer.

16. Computer program product comprising computer software in accordance with claim 15, stored on a machine readable storage medium.

17. Printer provided with a network connection unit for receiving externally generated print orders, a processing unit for processing digital image data and a printing unit, **characterised in that** the processing unit is provided with an apparatus according to claim 12, 13 or 14.

18. Image display device provided with a display screen, a processing unit for processing digital image data, **characterised in that** the processing unit is provided with an apparatus according to claim 12, 13 or 14.
